# EUROPÄISCHE PATENTSCHRIFT

(11) **EP 2 509 835 B1**
(45) Veröffentlichungstag und Bekanntmachung des Hinweises auf die Patenterteilung: **13.11.2013**
(21) Anmeldenummer: 10784776.6
(22) Anmeldetag: 25.11.2010
(51) Int. Cl.: B60T 11/236, F16J 15/16

(54) **ANORDNUNG UND VERFAHREN ZUR ABDICHTUNG EINES FÜGEBEREICHS ZWISCHEN EINEM ERSTEN FÜGEPARTNER UND EINEM ZWEITEN FÜGEPARTNER**
ARRANGEMENT AND METHOD FOR SEALING OFF A JOINT AREA BETWEEN A FIRST JOINT PARTNER AND A SECOND JOINT PARTNER
AGENCEMENT ET PROCÉDÉ POUR ÉTANCHÉIFIER UNE ZONE D'ASSEMBLAGE ENTRE UN PREMIER PARTENAIRE D'ASSEMBLAGE ET UN SECOND PARTENAIRE D'ASSEMBLAGE

(30) Priorität: 16.02.2010 DE 102010001979; 09.12.2009 DE 102009047706
(43) Veröffentlichungstag der Anmeldung: 17.10.2012
(73) Patentinhaber: Robert Bosch GmbH, 70442 Stuttgart (DE)
(72) Erfinder: RUCKH, Martin, 72074 Tuebingen (DE); HIERLEMANN, Bernd, 72127 Kusterdingen (DE)
(86) Internationale Anmeldenummer: PCT/EP2010/068166
(87) Internationale Veröffentlichungsnummer: WO 2011/069827

(56) Entgegenhaltungen:
- EP-A1- 0 887 578
- DE-A1- 19 643 302
- GB-A- 972 309

## Beschreibung

### Stand der Technik

Die Erfindung geht aus von einer Anordnung zur Abdichtung eines Fügebereichs nach der Gattung des unabhängigen Patentanspruchs 1, und von einem Verfahren zur Abdichtung eines Fügebereichs nach der Gattung des unabhängigen Patentanspruchs 8.

Aus dem Stand der Technik ist eine Anordnung zur Abdichtung eines Fügebereichs zwischen einem ersten Fügepartner und einem zweiten Fügepartner bekannt, welche beispielsweise ein Gehäuse eines Steuergeräts und einen Fluidblock eines Fluidaggregats eines Fahrzeugbremsensystems über eine Elastomerdichtung miteinander verbindet. Dabei ist mindestens ein elastisches Dichtelement zwischen einer ersten Dichtfläche des ersten Fügepartners und einer zweiten Dichtfläche des zweiten Fügepartners angeordnet und liegt üblicherweise auf einer ebenen Dichtfläche auf. An der Schnittstelle zwischen den Fügepartnern können nach einer entsprechenden Zeitdauer unter korrosiver Belastung Untenrvanderungen von Salz- und/oder Flüssigkeitsablagerungen auftreten, welche die Funktion des Steuergerätes beeinträchtigen können, so dass die spezifizierten Anforderungen teilweise nicht mehr erfüllt werden können.

In der Patentschrift DE 43 36 849 C1 werden beispielsweise ein Verfahren zum Abdichten insbesondere gegenüber Feuchtigkeit und Flüssigkeiten von Kabeleinführungen sowie eine entsprechende Kabeleinführung bzw. ein Schneidklemmverbinder beschrieben. Durch das beschriebene Verfahren zum Abdichten wird ein Eingangsbereich wenigstens bereichsweise mit einem Dichtgel gefüllt. Zusätzlich werden die zum Kontaktieren bzw. Schließen des Eingangsbereiches vorgesehenen Bauteile wenigstens bereichsweise zusätzlich mit einem Dichtfett versehen, welches in der Kontaktlage in von einem Gel nicht erreichbare Hohlräume eingepresst wird.

Die Patentanmeldung EP 0 887 578 A1 offenbart eine Dichtungsanordnung mit zumindest einer dynamisch beanspruchten ersten Dichtlippe aus einem elastomeren Werkstoff, die eine abzudichtende Fläche unter elastischer Vorspannung dichtend berührt und in axialer Richtung im Wesentlichen sinusförmig gewellt ausgebildet ist. Der ersten Dichtlippe ist auf der dem abzudichtenden Raum abgewandten Seite mit axialem Abstand benachbart eine zweite Dichtlippe zugeordnet, die sich parallel zur ersten Dichtlippe erstreckt und mit der ersten Dichtlippe und der abzudichtenden Fläche einen Hohlraum begrenzt, der mit einem Sperrfett befüllt ist. Die Dichtungsanordnung bewirkt eine Rückförderung des abzudichtenden Mediums in den abzudichtenden Raum und eine Schmierung der abzudichtenden Fläche.

### Offenbarung der Erfindung

Die erfindungsgemäße Anordnung zur Abdichtung eines Fügebereichs mit den Merkmalen des unabhängigen Patentanspruchs 1 hat demgegenüber den Vorteil, dass in einer Dichtzone einer ersten Dichtfläche eines ersten Fügepartners und/oder einer zweiten Dichtfläche eines zweiten Fügepartners mindestens ein Reservoir für ein Antikorrosionsmedium ausgebildet ist, wobei das Dichtelement das Reservoir zusammen mit der ersten und/oder zweiten Dichtfläche umschließt. Das Dichtelement liegt dabei zumindest bereichsweise auf der ersten und/oder zweiten Dichtfläche auf. Bevorzugt erfolgt die Auflage des Dichtelements kraftbeaufschlagt, wobei das Dichtelement elastisch vorgesehen und demnach verformbar ist. Insgesamt ist eine Anordnung des Dichtelements zur ersten und/oder zweiten Dichtfläche derart vorgesehen, dass nach Auflage des elastischen Dichtelements ein Hohlraum zwischen diesem und der ersten und/oder zweiten Dichtfläche umschließend ausgebildet ist. Der gebildete Hohlraum ist bevorzugt zusammenhängend und geschlossen innerhalb der Dichtzone ausgebildet und dient als Reservoir zur Aufnahme des Antikorrosionsmediums. Bevorzugt ist der gebildete Hohlraum bzw. das vorgesehene Reservoir vollständig mit dem Antikorrosionsmedium ausgefüllt. Die Wirkung des Antikorrosionsmediums basiert vorzugsweise auf einer Hydrophobisierung der Oberfläche, um wässrige Medien und/oder korrosive Dämpfe abzuweisen und so der Korrosion effektiv entgegenzuwirken. Durch das erfindungsgemäße Reservoir können Unterwanderungen von Salz- bzw. Flüssigkeitsablagerungen unter dem elastischen Dichtelement ins Innere der Fügepartner in vorteilhafter Weise vermieden werden.

Das erfindungsgemäße Verfahren zur Abdichtung eines Fügebereichs zwischen einem ersten Fügepartner und einem zweiten Fügepartner mit den Merkmalen des unabhängigen Patentanspruchs 8 hat demgegenüber den Vorteil, dass in einer Dichtzone des ersten und/oder zweiten Fügepartners mindestens ein Reservoir für ein Antikorrosionsmedium angelegt wird, wobei das mindestens eine Reservoir von dem elastischen Dichtelement und der ersten und/oder zweite Dichtfläche umschlossen wird. Das Reservoir wird vorzugsweise in einen metallischen Fügepartner eingebracht.

Das Antikorrosionsmedium ist so gewählt, dass es bei Erwärmung Kohlenwasserstoffe ausdünstet, welche durch das elastische Dichtelement im Reservoir gehalten werden und die Kapillarwirkung bzw. den Korrosionsdruck abfangen.

Ausführungsformen der vorliegenden Erfindung bremsen durch das Einbringen und Befüllen des mindestens einen Reservoirs mit einem geeigneten Medium in vorteilhafter Weise die Korrosion der beteiligten Fügepartner. In besonderer Ausgestaltung und Anordnung des Reservoirs können die Anpresskräfte des elastischen Dichtelementes in vorteilhafter Weise erhöht werden. Insbesondere erfolgt dies durch eine Ausgestaltung derart, dass zur Ausbildung des als Reservoir vorgesehenen Hohlraums das Dichtelement randseitig aufliegt, in bevorzugter Ausführung erfolgt dies auf einer schmalen Auflagebreite. Insbesondere ist diesbezüglich vorteilhaft, eine zweiseitige Auflage des Dichtelementes vorzusehen, so dass zwischen den zwei Auflagen des Dichtelementes und der ersten und/oder zweiten Dichtfläche das Reservoir für das Antikorrosionsmedium ausgebildet ist. Zudem wird durch das eingebrachte Reservoir und die damit verbundene Aufweitung eine Kapillarwirkung zwischen dem elastischen Dichtelement und der Dichtfläche unterbrochen, so dass die Unterwanderung des elastischen Dichtelements durch Salz- bzw. Flüssigkeitsablagerungen in vorteilhafter Weise deutlich reduziert werden kann. Durch die Verwendung des Antikorrosionsmediums, dessen Wirkung vorzugsweise auf einer Hydrophobisierung der Oberfläche basiert, um wässrige Medien und/oder korrosive Dämpfe abzuweisen, kann die Kapillarwirkung weiter reduziert werden. Zudem kann durch das mit dem Antikorrosionsmedium gefüllte Reservoir der Korrosionsdruck abgefangen und ein definierter, passivierter Bereich erzeugt werden, in welchem eine Korrosion in vorteilhafter Weise verhindert wird.

Ausführungsformen der vorliegenden Erfindung können beispielsweise bei hoch korrosiv belasteten Fügepartner wie beispielsweise bei der Verbindung eines Steuergerätegehäuses mit einem Fluidblock eines Fluidaggregats, welche Teil eines Fahrzeugbremsensystems sind, bzw. bei der Verbindung eines Steuergerätegehäuses mit einem Servomotor bei einer elektrischen Servolenkung eingesetzt werden. Somit verhindern Ausführungsformen der Erfindung in vorteilhafter Weise das Unterwandern des mindestens einen Dichtelements über die Lebensdauer der Fügepartner. Bei der Verbindung von zwei metallischen Fügepartnern kann in jeden der metallischen Fügepartner ein mit dem Antikorrosionsmedium gefülltes Reservoir eingebracht werden.

Durch die in den abhängigen Ansprüchen aufgeführten Maßnahmen und Weiterbildungen sind vorteilhafte Verbesserungen der im unabhängigen Patentanspruch 1 angegebenen Anordnung zur Abdichtung eines Fügebereichs sowie des im unabhängigen Patentanspruch 8 angegebenen Verfahren zur Abdichtung eines Fügebereichs möglich.

Besonders vorteilhaft ist, dass die Geometrie des mindestens einen Reservoirs an den Einsatzort und/oder an das elastische Dichtelement angepasst ist. So kann das mindestens eine Reservoir beispielsweise in mindestens einen metallischen Fügepartner als umlaufende Nut mit abgerundeten Kanten eingebracht werden, auf denen das elastische Dichtelement aufliegt. Durch das Abrunden der , Kanten kann eine Beschädigung des elastischen Dichtelements in vorteilhafter Weise vermieden werden. Das Korrosionsmedium ist innerhalb der vorgesehenen Nut besonders gut geschützt. Insbesondere dadurch, dass die Nut starr ausgebildet ist, ist ein Rausdrücken des Antikorrosionsmediums aus der Nut durch Kräfte im Betrieb nicht zu befürchten. Ebenso ist ein Entweichen durch die metallische Wandung des metallischen Fügepartners innerhalb der eingebrachten Nut beispielsweise durch ein Hindurchdiffundieren sichergestellt.

In einer alternativen Ausführung ist das mindestens eine Reservoir in einer innerhalb der Dichtzone umlaufenden Vertiefung des Dichtelementes eingebracht. Dabei liegen in besonders vorteilhafter Weise die seitlich abstehende Wandung der Vertiefung innerhalb des Dichtelements als Dichtlippen auf der ersten und/oder zweiten Dichtfläche auf. Auf diese Weise sind hohe Anpresskräfte im Bereich der Dichtlippen möglich. Zusätzlich ist der reservoirbildende Hohlraum ohne erhöhten Fertigungsaufwand bereits im Dichtungselement vorgesehen. Dabei ist ein Reservoir zur ersten und/oder zweiten Dichtfläche hin problemlos abbildbar. Weitere Bearbeitungen an der ersten und/oder zweiten Dichtflächebeispielsweise das Einbringen einer Nut - können entfallen. Zusätzlich kann das Antikorrosionsmedium in einfacher Form in die elastische Dichtung eingebracht werden und zur Verarbeitung bereitgestellt werden.

In Ausgestaltung der erfindungsgemäßen Abdichtung ist als Antikorrosionsmedium ein flüssiges und/oder zähflüssiges Fett und/oder Öl in das mindestens eine Reservoir gefüllt, deren Wirkung vorzugsweise auf einer Hydrophobisierung der Oberfläche basiert, um wässrige Medien und/oder korrosive Dämpfe abzuweisen, und so die Kapillarwirkung bzw. den Korrosionsdruck abfangen zu können..

In weiterer Ausgestaltung der erfindungsgemäßen Abdichtung kann ein mit dem Antikorrosionsmedium getränkter Träger, wie beispielsweise eine Schnur und/oder Filz in das Reservoir eingelegt werden.

Ein Ausführungsbeispiel der Erfindung ist in der Zeichnung dargestellt und wird in der nachfolgenden Beschreibung näher erläutert.

### Kurze Beschreibung der Zeichnung

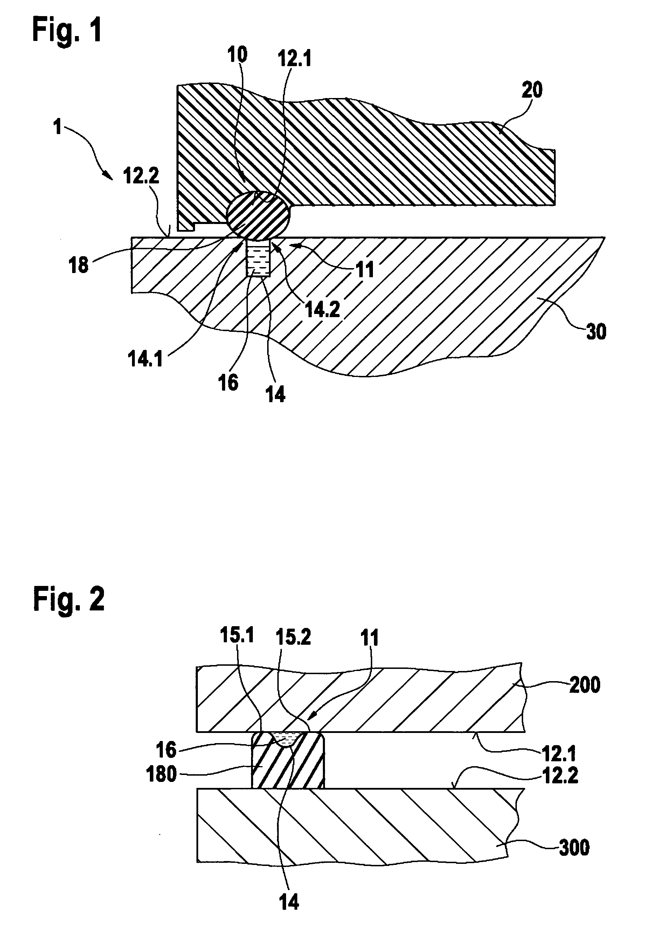

Fig. 1 zeigt eine schematische Schnittdarstellung eines Ausführungsbeispiels einer erfindungsgemäßen Anordnung zur Abdichtung eines Fügebereichs.

### Ausführungsformen der Erfindung

Wie aus Fig. 1 ersichtlich ist, umfasst das dargestellte Ausführungsbeispiel der erfindungsgemäßen Anordnung 10 zur Abdichtung eines Fügebereichs 1 zwischen einem ersten Fügepartner 20 und einem zweiten Fügepartner 30 mindestens ein elastisches Dichtelement 18, welches zwischen einer ersten Dichtfläche 12.1 des ersten Fügepartners 20 und einer zweiten Dichtfläche 12.2 des zweiten Fügepartners 30 angeordnet ist. Im dargestellten Ausführungsbeispiel sind der erste Fügepartner 20 als Kunststoffgehäuse eines Steuergeräts und der zweite Fügepartner 30 als metallischer Fluidblock eines Fahrzeugbremsensystems ausgeführt. Selbstverständlich können Ausführungsformen der Erfindung auch für Verbindungen zwischen zwei metallischen Fügepartnern verwendet werden, wobei dann in einem oder in beiden Fügepartnern mindestens ein Reservoir mit einem Antikorrosionsmedium eingebracht werden können.

Wie aus Fig. 1 weiter ersichtlich ist, ist in einer Dichtzone 11 der zweiten Dichtfläche 12.2 ein Reservoir 14 für ein Antikorrosionsmedium 16 eingebracht, dessen Wirkung vorzugsweise auf einer Hydrophobisierung der Oberfläche basiert, um wässrige Medien und/oder korrosive Dämpfe abzuweisen und so der Korrosion effektiv entgegenzuwirken. Hierbei ist die Geometrie des Reservoirs 14 so an den Einsatzort und/oder an das elastische Dichtelement 18 angepasst, dass das elastische Dichtelement 18 das Reservoir 14 abschließt, um ein Verflüchtigen des in das Reservoir 14 eingefüllten Antikorrosionsmediums 16 zu verhindern. Im dargestellten Ausführungsbeispiel ist das Reservoir 14 in Form einer eingefrästen umlaufenden Nut mit abgerundeten Kanten 14.1, 14.2 in den metallischen als Fluidblock ausgeführten zweiten Fügepartner 30 eingebracht. Das elastische Dichtelement 18 liegt auf den abgerundeten Kanten 14.1, 14.2 auf und schließt das als Nut ausgeführte Reservoir 14 ab, hierbei verhindern die abgerundeten Kanten 14.1, 14.2 des als Nut ausgeführten Reservoirs 14 eine Beschädigung des elastischen Dichtelements 18. Durch das erfindungsgemäße Reservoir 14 können Unterwanderungen von Salz- bzw. Flüssigkeitsablagerungen unter dem elastischen Dichtelement 18 ins Innere des als Steuergerätegehäuse ausgeführten ersten Fügepartners 20 in vorteilhafter Weise vermieden werden, so dass eine Korrosion der beteiligten Fügepartner 20, 30 gebremst und/oder sogar vollständig vermieden werden kann. Durch die Anordnung des elastischen Dichtelements 18 auf den Rändern 14.1, 14.2 des Reservoirs 14 können die Anpresskräfte des elastischen Dichtelements 18 erhöht werden. Zudem wird durch das eingebrachte Reservoir 14 und die damit verbundene Aufweitung eine Kapillarwirkung zwischen dem Dichtelement 18 und der zweiten Dichtfläche 12.2 unterbrochen, so dass die Unterwanderung des elastischen Dichtelements 18 durch Salz- bzw. Flüssigkeitsablagerungen in vorteilhafter Weise deutlich reduziert werden kann. Durch die Verwendung eines Antikorrosionsmediums 16, dessen Wirkung vorzugsweise auf einer Hydrophobisierung der Oberfläche basiert, kann die Kapillarwirkung weiter reduziert werden. Durch das mit dem Antikorrosionsmedium 16 gefüllte Reservoir 14 kann der Korrosionsdruck abgefangen und ein definierter, passivierter Bereich erzeugt werden, in welchem eine Korrosion in vorteilhafter Weise verhindert wird.

Fig. 2 zeigt eine alternative Ausführung der Erfindung. Im Unterschied zur Ausführung entsprechend der Fig. 1 ist in keinem der zum Abdichten eines Fügebereichs angeordneten Fügebpartner 200 und 300 eine Nut vorgesehen. Vielmehr sind die Dichtflächen 12.1 und/oder 12.2, insbesondere in einem Bereich der Dichtzone 11, eben ausgeführt. Dadurch entfällt in vorteilhafter Weise die in der ersten Ausführung beschriebene Nut in dem vorzugsweise metallischen Fügepartner 200 und/oder 300. Stattdessen ist mindestens ein Reservoir 14 in einer innerhalb der Dichtzone 11 umlaufenden Vertiefung des Dichtelementes 180 eingebracht, wobei seitlich abstehende Wände der Vertiefung als Dichtlippen15.1 und 15.2 auf der ersten und/oder zweiten Dichtfläche 12.1, 12.2 aufliegen. Durch die schmalen Auflagen der Dichtlippen 15.1 und 15.2 ist die Aufrechterhaltung einer in der Dichtzone 11 geforderten Dichtkraft besonders gut gewährleistet. Das Dichtelement 180 ist bevorzugt einseitig mit der Nut ausgebildet und auf der der Nut abgewandten Seite mit dem zweiten Fügepartner 300 dicht verbunden, beispielsweise durch Verkleben oder Aufspritzen. Zu diesem Zweck kann der zweite Fügepartner 300 auch eine Vertiefung aufweisen, in welcher die Dichtung 180 axial auf der Dichtfläche 12.2 positioniert angeordnet werden kann.
Optional ist möglich die Dichtung auch mit mehr als zwei Dichtlippen auszuführen, wobei dann idealer Weise alle Dichtlippen kraftbeaufschlagt auf der Dichtfläche 12.1 des ersten Fügepartners 200 aufliegen. Dabei sind dann auf der Seite der Dichtlippen mehrere Reservoirs 14 gebildet, wobei zumindest ein gebildetes Reservoir 14 mit einem Antikorrisionsmedium 16, bevorzugt vollständig, gefüllt ist. Ebenso können beidseitig der Dichtung 180 jeweils zumindest eine Nut vorgesehen sein, so dass zumindest 2 Dichtlippen 15.1 und 15.2 sowohl auf der ersten Dichtfläche 12.1 des ersten Fügepartners 200 als auch auf der zweiten Dichtfläche 12.2 des zweiten Fügepartners 300 aufliegen und somit zu den Fügepartnern 200 und 300 jeweils eine Dichtzone 11 ausbilden. Eine zusätzlich in der Dichtzone 11 im ersten Fügepartners 200 und/oder zweiten Fügepartners 300 vorgesehene Nut kann dann als Positionierhilfe beim Einlegen des Dichtelementes 180 dienen.

Als Antikorrosionsmedium 16 können beispielsweise flüssige und/oder zähflüssige Fette und/oder Öle in das Reservoir 14 gefüllt werden. Bei einer alternativen nicht dargestellten Ausführungsform kann ein mit dem Antikorrosionsmedium 16 getränkter Träger, wie beispielsweise eine Schnur oder ein Filz in das Reservoir 14 eingelegt werden. Bevorzugt wird das Antikorrosionsmedium 16 so gewählt, dass es bei Erwärmung Kohlenwasserstoffe ausdünstet. Die ausgedünsteten Kohlenwasserstoffe werden durch das elastische Dichtelement 18, 180 im Reservoir 14 gehalten und fangen die Kapillarwirkung bzw. den Korrosionsdruck ab. Gemäß dem korrespondierenden erfindungsgemäßen Verfahren zur Abdichtung eines Fügebereichs 1 zwischen dem ersten Fügepartner 20, 200 und dem zweiten Fügepartner 30, 300 mit mindestens einem elastischen Dichtelemente 18, 180 wird in der vorgesehenen Dichtzone 11 im ersten und/oder zweiten Fügepartner 20, 200, 30, 300 mindestens ein Reservoir 14 für ein Antikorrosionsmedium 16 angelegt, dessen Wirkung vorzugsweise auf einer Hydrophobisierung der Oberfläche basiert, um wässrige Medien und/oder korrosive Dämpfe abzuweisen, wobei das mindestens eine Reservoir 14 von dem elastische Dichtelement 18, 180 und der ersten und /oder zweite Dichtfläche 12.1, 12.2 umschlossen wird.

Ausführungsformen der Erfindung stellen in vorteilhafter Weise eine Korrosionsbremse zur Verhinderung von korrosiven Unterwanderungen bei Fügepartnern zur Verfügung. Durch das Einbringen und Befüllen des Reservoirs mit geeigneten Materialien wird die Korrosion in mehrfacher Weise gebremst. So werden in vorteilhafte Weise die Anpresskräfte des elastischen Dichtelements an den beiden Kanten des Reservoirs erhöht, die Kapillarwirkung durch Aufweitung unterbrochen, wässrige Medien und/oder korrosive Dämpfe durch die Hydrophobisierung der Oberfläche des Antikorrosionsmediums abgewiesen und der Korrosionsdruck in dem definierten, passivierten Reservoir abgefangen. Dadurch können in vorteilhafter Weise Unterwanderungen von Salz- bzw. Flüssigkeitsablagerungen unter dem elastischen Dichtelement ins Innere des Steuergeräts und eine Beeinträchtigung der Funktionen des Steuergeräts über die Lebensdauer verhindert werden.

## Patentansprüche

1. Anordnung zur Abdichtung eines Fügebereichs zwischen einem ersten Fügepartner (20, 200) und einem zweiten Fügepartner (30, 300) mit mindestens einem elastischen Dichtelement (18, 180), welches zwischen einer ersten Dichtfläche (12.1) des ersten Fügepartners (20, 200) und einer zweiten Dichtfläche (12.2) des zweiten Fügepartners (30, 300) angeordnet und durch Anpresskräfte statisch belastet ist, **dadurch gekennzeichnet, dass** in einer Dichtzone (11) der ersten und/oder zweiten Dichtfläche (12.1, 12.2) mindestens ein Reservoir (14) für ein Antikorrosionsmedium (16) ausgebildet ist, welches bei Erwärmung Kohlenwasserstoffe ausdünstet, wobei das Dichtelement (18, 180) das Reservoir (14) zusammen mit der ersten und/oder zweiten Dichtfläche (12.1, 12.2) umschließt.

2. Anordnung nach Anspruch 1, **dadurch gekennzeichnet, dass** die Geometrie des mindestens einen Reservoirs (14) an den Einsatzort und/oder an das elastische Dichtelement (18, 180) angepasst ist.

3. Anordnung nach Anspruch 1 oder 2, **dadurch gekennzeichnet, dass** das mindestens eine Reservoir (14) in mindestens einen metallischen Fügepartner (30, 300) als umlaufende Nut mit abgerundeten Kanten (14.1, 14.2) eingebracht ist, auf denen das elastische Dichtelement (18) aufliegt.

4. Anordnung nach Anspruch 1 oder 2, **dadurch gekennzeichnet, dass** das mindestens eine Reservoir (14) in einer innerhalb der Dichtzone (11) umlaufenden Vertiefung des Dichtelementes (180) eingebracht ist, wobei seitlich abstehende Wände der Vertiefung als Dichtlippen (15.1, 15.2) auf der ersten und/oder zweiten Dichtfläche (12.1. 12.2) aufliegen.

5. Anordnung nach einem der Ansprüche 1 bis 4, **dadurch gekennzeichnet, dass** als Antikorrosionsmedium (16) ein flüssiges und/oder zähflüssiges Fett und/oder Öl in das mindestens eine Reservoir (14) gefüllt ist.

6. Anordnung nach einem der Ansprüche 1 bis 5, **dadurch gekennzeichnet, dass** ein mit dem Antikorrosionsmedium (16) getränkter Träger in das mindestens eine Reservoir (14) eingelegt ist.

7. Anordnung nach einem der Ansprüche 1 bis 6, **dadurch gekennzeichnet, dass** der erste Fügepartner (20, 200) als Kunststoffgehäuse eines Steuergeräts und der zweite Fügepartner (30, 300) als metallischer Fluidblock ausgeführt sind.

8. Verfahren zur Abdichtung eines Fügebereichs zwischen einem ersten Fügepartner (20, 200) und einem zweiten Fügepartner (30, 300), zwischen denen mindestens ein elastisches Dichtelement (18, 180) angeordnet und durch Anpresskräfte statisch belastet wird, **dadurch gekennzeichnet, dass** in einer ersten Dichtzone (11) des ersten und/oder zweiten Fügepartners (20, 200, 30, 300) mindestens ein Reservoir (14) für ein Antikorrosionsmedium (16) angelegt wird, welches bei Erwärmung Kohlenwasserstoffe ausdünstet, wobei das mindestens eine Reservoir (14) von dem elastischen Dichtelement (18, 180) und der ersten und/oder zweiten Dichtfläche (12.1, 12.2) umschlossen wird.

9. Verfahren nach Anspruch 8, **dadurch gekennzeichnet, dass** als Antikorrosionsmedium (16) ein flüssiges und/oder zähflüssiges Fett und/oder Öl in das Reservoir (14) gefüllt oder ein mit dem Antikorrosionsmedium (16) getränkter Träger in das Reservoir (14) eingelegt wird.

## Claims

1. Arrangement for sealing off a joining area between a first part being joined (20, 200) and a second part being joined (30, 300) with at least one elastic sealing element (18, 180), which is disposed between a first sealing surface (12.1) of the first part being joined (20, 200) and a second sealing surface (12.2) of the second part being joined (30, 300) and is statically loaded by pressing forces, **characterized in that** in a sealing zone (11) of the first and/or second sealing surface (12.1, 12.2) there is formed at least one reservoir (14) for an anticorrosion agent (16), which gives off hydrocarbons when heated, the sealing element (18, 180) enclosing the reservoir (14) together with the first and/or second sealing surface (12.1, 12.2).

2. Arrangement according to Claim 1, **characterized in that** the geometry of the at least one reservoir (14) is adapted to the application site and/or to the elastic sealing element (18, 180).

3. Arrangement according to Claim 1 or 2, **characterized in that** the at least one reservoir (14) is incorporated in at least one metal part being joined (30, 300) as a peripheral groove with rounded-off edges (14.1, 14.2), on which the elastic sealing element (18) rests.

4. Arrangement according to Claim 1 or 2, **characterized in that** the at least one reservoir (14) is incorporated in a depression of the sealing element (180) peripherally within the sealing zone (11), laterally protruding walls of the depression resting as sealing lips (15.1, 15.2) on the first and/or second sealing surface (12.1, 12.2).

5. Arrangement according to one of Claims 1 to 4, **characterized in that** the at least one reservoir (14) is filled with a liquid and/or viscous grease and/or oil as the anticorrosion agent (16).

6. Arrangement according to one of Claims 1 to 5, **characterized in that** the at least one reservoir (14) has placed in it a carrier impregnated with the anticorrosion agent (16).

7. Arrangement according to one of Claims 1 to 6, **characterized in that** the first part being joined (20, 200) takes the form of a plastic housing of a control device and the second part being joined (30, 300) takes the form of a metal fluid block.

8. Method for sealing off a joining area between a first part being joined (20, 200) and a second part being joined (30, 300), between which at least one elastic sealing element (18, 180) is disposed and is statically loaded by pressing forces, **characterized in that** at least one reservoir (14) for an anticorrosion agent (16), which gives off hydrocarbons when heated, is created in a first sealing zone (11) of the first and/or second part being joined (20, 200, 30, 300), the at least one reservoir (14) being enclosed by the elastic sealing element (18, 180) and the first and/or second sealing surface (12.1, 12.2).

9. Method according to Claim 8, **characterized in that** a liquid and/or viscous grease and/or oil is filled into the reservoir (14) as the anticorrosion agent (16) or a carrier impregnated with the anticorrosion agent (16) is placed into the reservoir (14).

## Revendications

1. Agencement pour étanchéifier une zone d'assemblage entre un premier partenaire d'assemblage (20, 200) et un deuxième partenaire d'assemblage (30, 300), comprenant au moins un élément d'étanchéité élastique (18, 180) qui est disposé entre une première surface d'étanchéité (12.1) du premier partenaire d'étanchéité (20, 200) et une deuxième surface d'étanchéité (12.2) du deuxième partenaire d'étanchéité (30, 300) et qui est sollicité statiquement par des forces de pression, **caractérisé en ce qu'**au moins un réservoir (14) pour un milieu anticorrosion (16) est réalisé dans une zone d'étanchéité (11) de la première et/ou de la deuxième surface d'étanchéité (12.1, 12.2), lequel milieu anticorrosion exhale des hydrocarbures lorsqu'il est chauffé, l'élément d'étanchéité (18, 180) entourant, conjointement avec la première et/ou la deuxième surface d'étanchéité (12.1, 12.2), le réservoir (14).

2. Agencement selon la revendication 1, **caractérisé en ce que** la géométrie de l'au moins un réservoir (14) est adaptée au lieu d'utilisation et/ou à l'élément d'étanchéité élastique (18, 180).

3. Agencement selon la revendication 1 ou 2, **caractérisé en ce que** l'au moins un réservoir (14) est ménagé sous forme de rainure périphérique dotée d'arêtes arrondies (14.1, 14.2) dans au moins un partenaire d'assemblage métallique (30, 300), sur lesquelles arêtes arrondies repose l'élément d'étanchéité élastique (18).

4. Agencement selon la revendication 1 ou 2, **caractérisé en ce que** l'au moins un réservoir (14) est ménagé dans un renfoncement de l'élément d'étanchéité (180) s'étendant de manière périphérique à l'intérieur de la zone d'étanchéité (11), des parois faisant saillie latéralement du renfoncement reposant en tant que lèvres d'étanchéité (15.1, 15.2) sur la première et/ou la deuxième surface d'étanchéité (12.1, 12.2).

5. Agencement selon l'une quelconque des revendications 1 à 4, **caractérisé en ce qu'**en tant que milieu anticorrosion (16), une graisse et/ou huile liquide et/ou visqueuse remplit l'au moins un réservoir (14).

6. Agencement selon l'une quelconque des revendications 1 à 5, **caractérisé en ce qu'**un support imprégné du milieu anticorrosion (16) est inséré dans l'au moins un réservoir (14).

7. Agencement selon l'une quelconque des revendications 1 à 6, **caractérisé en ce que** le premier partenaire d'assemblage (20, 200) est réalisé sous forme de boîtier en plastique d'un appareil de commande et le deuxième partenaire d'assemblage (30, 300) est réalisé sous forme de bloc fluidique métallique.

8. Procédé pour étanchéifier une zone d'assemblage entre un premier partenaire d'assemblage (20, 200) et un deuxième partenaire d'assemblage (30, 300), entre lesquels au moins un élément d'étanchéité élastique (18, 180) est disposé et sollicité statiquement par des forces de pression, **caractérisé en ce qu'**au moins un réservoir (14) pour un milieu anticorrosion (16) est aménagé dans une première zone d'étanchéité (11) du premier et/ou du deuxième partenaire d'assemblage (20, 200, 30, 300), lequel milieu anticorrosion exhale des hydrocarbures lorsqu'il est chauffé, l'au moins un réservoir (14) étant entouré par l'élément d'étanchéité élastique (18, 180) et la première et/ou la deuxième surface d'étanchéité (12.1, 12.2).

9. Procédé selon la revendication 8, **caractérisé en ce qu'**en tant que milieu anticorrosion (16), une graisse et/ou huile liquide et/ou visqueuse remplit le réservoir (14) ou un support imprégné du milieu anticorrosion (16) est inséré dans le réservoir (14).
